# EUROPEAN PATENT APPLICATION

(11) **EP 4 819 282 A1**
(43) Date of publication of application: **07.10.2026**
(21) Application number: 24897384.4
(22) Date of filing: 19.11.2024
(51) Int. Cl.: H01M 10/0567, H01M 10/052, H01M 50/107

(54) **NONAQUEOUS ELECTROLYTE FOR SECONDARY BATTERY, AND SECONDARY BATTERY**

(30) Priority: 30.11.2023 JP 2023203136
(71) Applicant: Panasonic Intellectual Property Management Co., Ltd., Kadoma-shi, Osaka 571-0057 (JP)
(72) Inventor: ZHONG Yuanlong, Kadoma-shi, Osaka 571-0057 (JP)
(74) Representative: Novagraaf International SA
(86) International application number: PCT/JP2024/040949
(87) International publication number: WO 2025/115698

(57) **Abstract**

A nonaqueous electrolyte for a secondary battery including a nonaqueous solvent, a salt that dissolves in the nonaqueous solvent, and an additive that dissolves in the nonaqueous solvent. The additive includes a 1,4-dioxane compound and a sulfur-containing compound. The sulfur-containing compound has at least one of an SO₃ structure and an SO₄ structure.

## Description

### [Cross Reference to Related Application]

The present application is based on and claims priority under 35 U.S.C. §119 to Japanese Patent Application No. 2023-203136, filed on November 30, 2023, of which entire content is incorporated herein by reference into the present application.

### [Technical Field]

The present disclosure relates to a nonaqueous electrolyte for a secondary battery and a secondary battery.

### [Background Art]

Patent Literature 1 proposes "a nonaqueous electrolyte secondary battery including a positive electrode and a negative electrode that contain a material capable of reversibly absorbing and releasing lithium, a nonaqueous electrolyte containing a lithium salt, and a separator, characterized in that the nonaqueous electrolyte contains a cyclic carbonate, a chain carbonate ester, and at least one cyclic ether selected from tetrahydrofuran, 2-methyltetrahydrofuran, 1,3-dioxolane, 1,3-dioxane, 1,4-dioxane, trioxane, and derivatives of these in an amount of 0.1 vol% or more and 7 vol% or less, the nonaqueous electrolyte has a water content of 0.5 ppm or more and 50 ppm or less and a free acid content of 2 ppm or more and 100 ppm or less as HF, and the lithium salt contained in the nonaqueous electrolyte includes LiPF₆ and LiBF₄."

Patent Literature 2 proposes "a nonaqueous electrolyte secondary battery including a positive electrode, a negative electrode, and an electrolyte solution, wherein the electrolyte solution contains lithium bis(fluorosulfonyl)imide and 1,4-dioxane."

Patent Literature 3 proposes "a nonaqueous electrolyte solution containing an unsaturated sultone, a nonaqueous solvent, and an electrolyte", wherein the unsaturated sultone is a predetermined compound such as 1,3-propene sultone, and "the amount of the unsaturated sultone added is 0.001 to 10% by mass relative to the total of the nonaqueous electrolyte solution."

### [Citation List]

### [Patent Literature]

Patent Literature 1: Japanese Patent No. 4066465
Patent Literature 2: International Publication No. 2020/158169
Patent Literature 3: Japanese Patent No. 4190162

### [Summary of Invention]

### [Technical Problem]

Patent Literature 3 reports that the use of an unsaturated sultone significantly suppresses the reductive decomposition of the nonaqueous electrolyte during storage at high temperatures. By contrast, when the nonaqueous electrolyte contains a sulfur-containing compound, there is a disadvantage that battery corrosion proceeds rapidly when the secondary battery becomes overdischarged. In the battery in an overdischarged state, it is presumed that sulfate ions or sulfite ions are generated from the sulfur-containing compound and these ions corrode the battery can.

### [Solution to Problem]

One aspect of the present disclosure relates to a nonaqueous electrolyte for a secondary battery, including a nonaqueous solvent; a salt that dissolves in the nonaqueous solvent; and an additive that dissolves in the nonaqueous solvent, wherein the additive includes a 1,4-dioxane compound and a sulfur-containing compound, the sulfur-containing compound having at least one of an SO₃ structure and an SO₄ structure.

Another aspect of the present disclosure relates to a secondary battery including: a positive electrode; a separator; a negative electrode that faces the positive electrode with the separator therebetween; a nonaqueous electrolyte; and a battery can that houses the positive electrode, the separator, the negative electrode, and the nonaqueous electrolyte, wherein the nonaqueous electrolyte is the above-described nonaqueous electrolyte for a secondary battery.

### [Advantageous Effects of Invention]

According to the present disclosure, the corrosion of the battery can of a secondary battery in an overdischarged state is suppressed even when the nonaqueous electrolyte contains a sulfur-containing compound.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

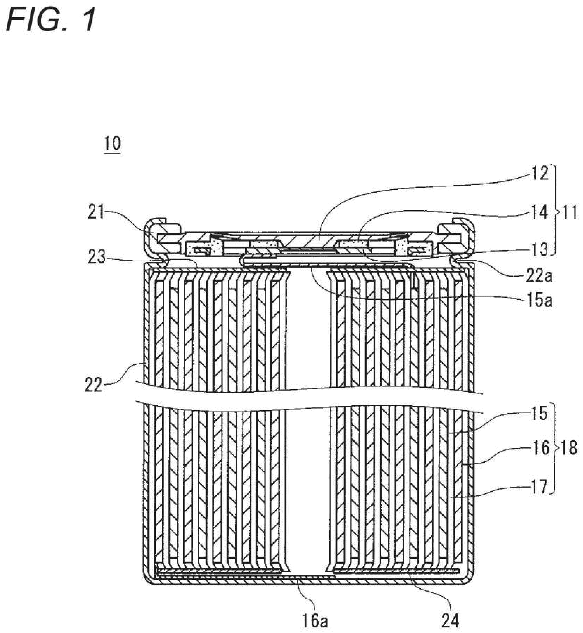

[FIG. 1] FIG. 1 is a longitudinal cross-sectional view of a secondary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. For constituent elements other than those characteristic elements of the present disclosure, known constituent elements of secondary batteries may be applied. In the present description, the phrase "a numerical value A to a numerical value B" means to include the numerical value A and the numerical value B. For example, "A to B mol%" is equivalent to "A mol% or more and B mol% or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type thereof may be selected and used singly, or two or more types thereof may be selected and used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

Nonaqueous electrolyte secondary batteries include, for example, lithium-ion secondary batteries that use, as a negative electrode active material, a material that reversibly absorbs and releases at least lithium ions, lithium-metal secondary batteries in which lithium metal deposits on the negative electrode during charging and the lithium metal dissolves during discharging, and solid-state batteries containing a gel electrolyte.

A nonaqueous electrolyte secondary battery according to the present disclosure includes a positive electrode, a negative electrode, a nonaqueous electrolyte, and a battery can that houses these components. Usually, a separator is provided between the positive electrode and the negative electrode. Usually, the nonaqueous electrolyte has lithium ion conductivity.

In the present specification, "overdischarge characteristics" can be evaluated according to the content of a component eluted from the battery can of the battery in the nonaqueous electrolyte that has become overdischarged by short-circuiting the positive electrode and the negative electrode. Since the battery can used in Examples of the present specification is made of a metal containing iron (Fe), the component eluted from the battery can includes Fe.

Further, "high-temperature cycle characteristics" can be evaluated according to the capacity retention rate after constant-current constant-voltage charging (CCCV charging) of the secondary battery is performed for a predetermined number of cycles in a 45°C environment.

### [Nonaqueous Electrolyte]

The nonaqueous electrolyte contains a nonaqueous solvent, a salt, and an additive. The nonaqueous electrolyte containing a nonaqueous solvent may be a liquid electrolyte, or may be in a state in which fluidity is restricted by a gelling agent or the like. In the case of, for example, a lithium-ion secondary battery or a lithium-metal secondary battery, a lithium salt is used as the salt. The salt and the additive are basically dissolved in the nonaqueous solvent. As long as the effects of the invention are not significantly impaired, a part of the salt or additive may precipitate or separate and remain undissolved in the nonaqueous solvent. The additive defined by the general formula described below may be a salt. In such a case, another salt is dissolved as a supporting electrolyte in the nonaqueous solvent.

The nonaqueous electrolyte recovered from the secondary battery may contain little or no additive. In this case, an oxidation product or reduction product of the additive can be contained in the battery. Even in such a case, the additive at a level above the detection limit usually remains in the nonaqueous electrolyte collected from the secondary battery. Therefore, it can be confirmed that the nonaqueous electrolyte contains the additive.

### (Additive)

In the present specification, 1,4-dioxane compounds and sulfur-containing compounds are classified as additives.

The term "1,4-dioxane compounds" is a general term for compounds having a 1,4-dioxane skeleton. The 1,4-dioxane skeleton is a six-membered ring composed of four carbon atoms and two oxygen atoms. The 1,4-dioxane skeleton does not contain a ketone group. For example, cyclic carboxylic acid anhydrides are each not a 1,4-dioxane compound.

The 1,4-dioxane compound may be 1,4-dioxane (C₄H₈O₂) or a 1,4-dioxane derivative. That is, the 1,4-dioxane compound may include at least one selected from the group consisting of 1,4-dioxane and a 1,4-dioxane derivative.

The 1,4-dioxane derivative is a general term for compounds in which at least one hydrogen atom of 1,4-dioxane is substituted with a substituent. The substituent may be at least one of a halogen atom, a hydrocarbon group, and an oxyhydrocarbon group, for example. At least one hydrogen atom of the hydrocarbon group, which is the substituent of the 1,4-dioxane derivative, may be substituted with a halogen atom. Among halogen atoms, a fluorine atom (F) is preferred.

The 1,4-dioxane compound can be represented by general formula (1): 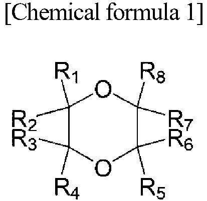 .

R1 to R8 each independently represent a hydrogen atom or the substituent described above.

Each sulfur-containing compound has at least one of an SO₃ structure and an SO₄ structure. Hereinafter, a compound having at least one of an SO₃ structure and an SO₄ structure is also referred to as "sulfur-containing compound (S)". The SO₃ structure refers to a structure having a sulfur atom and three oxygen atoms directly bonded to the sulfur atom. The SO₄ structure refers to a structure having a sulfur atom and four oxygen atoms directly bonded to the sulfur atom.

The sulfur-containing compound (S) may include at least one selected from the group consisting of a hexavalent sulfur compound and a tetravalent sulfur compound, for example. The hexavalent sulfur compound contains a sulfur atom having a valence of 6. The tetravalent sulfur compound contains a sulfur atom having a valence of 4.

The hexavalent sulfur compound may have a structure represented by general formula (2): 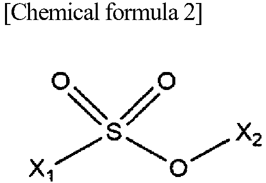 .

X1 represents a halogen atom, a hydrocarbon group, or an oxyhydrocarbon group, and X2 represents a hydrocarbon group, a silyl group, or an alkali metal. X1 and X2 may form a ring. That is, the hexavalent sulfur compound may be a cyclic sulfur compound. At least one hydrogen atom of the hydrocarbon group may be substituted with a halogen atom. Among halogen atoms, a fluorine atom (F) is preferred.

The tetravalent sulfur compound may have a structure represented by general formula (3): 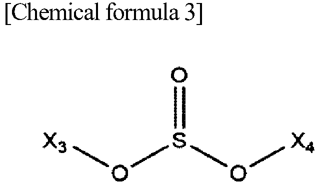 .

X3 and X4 each independently represent a hydrocarbon group, a silyl group, or an alkali metal. X3 and X4 may form a ring. That is, the tetravalent sulfur compound may be a cyclic sulfur compound. At least one hydrogen atom of the hydrocarbon group may be substituted with a halogen atom. Among halogen atoms, a fluorine atom (F) is preferred.

Here, the sulfur-containing compound (S) is a beneficial additive having an effect of improving the high-temperature cycle characteristics. However, when the secondary battery including a nonaqueous electrolyte containing the sulfur-containing compound (S) becomes overdischarged, a phenomenon is observed in which the corrosion of the battery can progresses rapidly. In contrast, the 1,4-dioxane compound has an effect of remarkably suppressing the corrosion of the battery can that occurs when the sulfur-containing compound (S) is contained in the nonaqueous electrolyte.

When no sulfur-containing compound (S) is contained in the nonaqueous electrolyte, no notable effect of the 1,4-dioxane compound in suppressing the corrosion of the battery can is observed because the corrosion of the battery can does not become apparent. For example, lithium bis(fluorosulfonyl)imide (Li(FSO₂)₂), which is one type of sulfur-containing compound that has an SO₂ structure but neither an SO₃ structure nor an SO₄ structure, does not cause rapid progression of the corrosion of the battery can even when the secondary battery becomes overdischarged. In such a case, the 1,4-dioxane compound does not have a notable effect of improving the overdischarge characteristics. Note that a sulfur-containing compound having an SO₂ structure also have an effect of improving the high-temperature cycle characteristics, but the sulfur-containing compound (S) exhibits a more pronounced improvement effect.

The effect of improving the overdischarge characteristics as described above is a phenomenon observed only with the 1,4-dioxane compound among dioxane compounds. Compounds similar to the 1,4-dioxane compound, for example, 1,3-dioxane having a six-membered ring structure, do not have an effect of improving the overdischarge characteristics. Therefore, the effect of improving the overdischarge characteristics is an effect unique to the 1,4-dioxane compound. It has been confirmed that the 1,4-dioxane compound has an effect of trapping ionic species (e.g., sulfate ions and sulfite ions) derived from the sulfur-containing compound (S) in a nonaqueous electrolyte and an effect of forming a dense film mainly composed of an oxide and a sulfide on the inner surface of a battery can. Such a film has an effect of protecting the surface of the battery can and is considered to inhibit the reaction between the battery can and the ionic species derived from the sulfur-containing compound (S).

Furthermore, the 1,4-dioxane compound can have an effect of further improving the high-temperature cycle characteristics. This effect cannot be obtained when a sulfur-containing compound (e.g., Li(FSO₂)₂) having an SO₂ structure is used. When the sulfur-containing compound having an SO₂ structure and the 1,4-dioxane compound are used in combination, a tendency for the high-temperature cycle characteristics to decrease is observed instead of when the sulfur-containing compound having an SO₂ structure is used alone.

It is presumed that a hybrid film of the 1,4-dioxane compound and the sulfur-containing compound (S) is involved in further improvement in the cycle characteristics. It is considered that side reactions are highly suppressed by forming a hybrid protective film that is robust and does not inhibit the permeation of lithium ions into both the positive electrode and the negative electrode. As a result, it is considered that the charge transfer resistances of the positive electrode and the negative electrode are reduced, resulting in improvement in the high-temperature cycle characteristics.

The hybrid film can inhibit, for example, excessive reaction of a metal transition element constituting the positive electrode active material contained in the positive electrode with the nonaqueous electrolyte. This suppresses the deterioration of the positive electrode active material. In particular, when the positive electrode active material contains a lithium-containing composite oxide containing Ni at a high content, the effect of deterioration suppression is remarkable.

Furthermore, the hybrid film can suppress excessive reaction of the negative electrode active material (e.g., graphite or a silicon-containing material) contained in the negative electrode with the nonaqueous electrolyte. This suppresses the deterioration of the negative electrode active material. In particular, when the negative electrode active material contains a silicon-containing material, the effect of deterioration suppression is remarkable.

When at least one of R1 to R8 of the 1,4-dioxane compound in general formula (1) is an aliphatic hydrocarbon group or an aliphatic oxyhydrocarbon group (e.g., an alkoxy group), it is preferable that steric hindrance be small and the group may be, for example, a C₁₋₅ hydrocarbon group having 1 to 5 carbon atoms or an oxyhydrocarbon group (alkoxy group). When at least one of R1 to R8 is an aromatic hydrocarbon group (aryl group), the number of aromatic rings may be one.

R1 to R8 may each be a hydrogen atom, or one or more of these may be fluorine atoms with the remainder being hydrogen atoms. Alternatively, at least one of R1 to R8 may be an alkyl group, an alkenyl group, or an aryl group with each of the remainder being a hydrogen atom or a fluorine atom independently of each other. For the alkyl group, smaller steric hindrance is desirable, and the group may be, for example, a C₁₋₅ alkyl group having 1 to 5 carbon atoms (preferably a C₁₋₃ alkyl group having 1 to 3 carbon atoms). Similarly, the alkenyl group may be a C₂₋₅ alkenyl group having 2 to 5 carbon atoms. The hydrocarbon groups such as above may include, for example, a methyl group, an ethyl group, an ethylene group, a propyl group, and a propylene group.

A representative example of the 1,4-dioxane compound is 1,4-dioxane. Desirably, 1,4-dioxane accounts for 50% by mass or more, or even 80% by mass or more, of the 1,4-dioxane compound.

When X1 of the hexavalent sulfur compound in general formula (2) is a fluorine atom, X2 is desirably an alkyl group, an alkenyl group, an aryl group, a silyl group, or an alkali metal. X1 and X2 of the sulfur compound (2) may form a ring by being, for example, any of an alkylene group, an alkenylene group, and an ether group. The hexavalent sulfur compound may contain two hexavalent sulfurs. In such a case, X1 may be an ether group shared by two sulfur atoms, and X2 may be an alkylene group shared by two sulfur atoms.

X3 and X4 of the tetravalent sulfur compound in general formula (3) may be any of an alkyl group, an alkenyl group, and an aryl group. X3 and X4 may form a ring by being, for example, any of an alkylene group, an alkenylene group, and an ether group. The tetravalent sulfur compound may contain two tetravalent sulfurs. In such a case, X3 and X4 may each be an alkylene group or an ether group shared by two sulfur atoms.

The hexavalent sulfur compound encompasses a sulfate ester having an -O-S(=O)₂-O-structure and a sulfonate ester having an -S(=O)₂-O- structure. The tetravalent sulfur compound is a sulfite ester having an -O-S(=O)-O- structure. Therefore, it can be said that the sulfur-containing compound (S) is at least one selected from the group consisting of a sulfate ester, a sulfite ester, and a sulfonate ester.

As the sulfate ester, a C₂₋₄ alkyl sulfate is preferred. Specific examples thereof include ethylene sulfate, propylene sulfate, trimethylene sulfate, butylene sulfate, vinylene sulfate, ethyl sulfate, and methyl sulfate.

As the sulfite ester, a C₂₋₄ alkylene sulfite is preferred. Specific examples thereof include ethylene sulfite (ES), propylene sulfite, trimethylene sulfite, butylene sulfite, and vinylene sulfite.

As the sulfonate ester, at least one selected from the group consisting of a C₃₋₅ alkane sultone and a C₃₋₅ alkene sultone is preferred. Specific examples thereof include 1,3-propane sultone, 1,4-butane sultone, and 1,3-propene sultone.

One or two or more hydrogen atoms of the compounds exemplified above included in the sulfur-containing compound (S) may be substituted with a substituent. Examples of the substituent include an alkyl group, a hydroxyalkyl group, a hydroxy group, an alkoxy group, and a halogen atom. The number of carbon atoms of the substituent may be 1 to 3. As the halogen atom, a fluorine atom is desirable.

Among hexavalent sulfur compounds, at least one selected from the group consisting of lithium fluorosulfonate (LiFSO₃), 1-propene-1,3-sultone (PRS), ethylene sulfate (DTD), and 1,5,2,4-dioxadithiane-2,2,4,4-tetraoxide (MMDS) is particularly desirable because it is easily available and has a great effect of improving the high-temperature cycle characteristics. It is desirable that one or more of these account for 50% by mass or more, or even 80% by mass or more, of the hexavalent sulfur compound.

Among tetravalent sulfur compounds, at least one selected from the group consisting of ethylene sulfite (ES) and vinyl ethylene sulfite (VES) is particularly desirable because it is easily available and has a great effect of improving the high-temperature cycle characteristics. It is desirable that one or more of these account for 50% by mass or more, or even 80% by mass or more, of the tetravalent sulfur compound.

The mass content of the 1,4-dioxane compound in the nonaqueous electrolyte is, for example, 5% or less, and may be 0.01% to 5%, 0.1% to 5.0%, 0.1% to 2.0%, or 0.5% to 1.5%. In any of these cases, a sufficient effect of suppressing the corrosion of the battery can by the sulfur-containing compound (S) is obtained. In addition, since the hybrid film is formed to an appropriate extent and the charge-discharge reaction tends to proceed uniformly, it is considered that the effect of improving the high-temperature cycle characteristics is enhanced.

The mass content of the sulfur-containing compound (S) in the nonaqueous electrolyte is, for example, 5% or less, and may be 0.01% to 5%, 0.1% to 5%, 0.1% to 2.0%, or 0.5% to 1.5%. In any of these cases, a sufficient effect of improving the high-temperature cycle characteristics is obtained. Since the hybrid film is formed to an appropriate extent and the charge-discharge reaction tends to proceed uniformly, it is considered that the effect of suppressing side reactions is enhanced.

A mass content Ca of the 1,4-dioxane compound and a mass content Cb of the sulfur-containing compound (S) may satisfy 0.25 ≤ Cb/Ca ≤ 3, for example. More preferably, Cb/Ca may satisfy 0.5 ≤ Cb/Ca ≤ 3, 1 ≤ Cb/Ca ≤ 3, 1< Cb/Ca ≤ 3, or 1.3 ≤ Cb/Ca ≤ 2.5. In any of these cases, it is considered that the 1,4-dioxane compound acts more effectively on the sulfur-containing compound (S). When Cb/Ca is controlled as above, it is considered that the 1,4-dioxane compound is contained in an amount that does not inhibit film formation with the sulfur-containing compound (S). Thus, the effect of improving the high-temperature cycle characteristics can be enhanced. When Cb/Ca is controlled as above, the effect of the 1,4-dioxane compound in trapping sulfate ions, sulfite ions, or the like released by the sulfur-containing compound (S) is also sufficiently exhibited, thereby enabling suppression of battery corrosion.

The nonaqueous electrolyte may contain an additive other than those described above. Examples of such an additive include at least one selected from the group consisting of vinylene carbonate, fluoroethylene carbonate, and vinyl ethylene carbonate.

### (Nonaqueous Solvent)

Examples of the nonaqueous solvent include cyclic carbonates, chain carbonates, cyclic carboxylic acid esters, chain carboxylic acid esters, cyclic ethers, and chain ethers. The nonaqueous electrolyte may contain one type of nonaqueous solvent alone, or may contain two or more types in combination.

Examples of the cyclic carbonates include propylene carbonate (PC), ethylene carbonate (EC), fluoroethylene carbonate (FEC), and vinylene carbonate (VC).

Examples of the chain carbonates include diethyl carbonate (DEC), ethyl methyl carbonate (EMC), and dimethyl carbonate (DMC).

Examples of the cyclic carboxylic acid esters include γ-butyrolactone (GBL) and γ-valerolactone (GVL)

Examples of the chain carboxylic acid esters include methyl formate, ethyl formate, propyl formate, methyl acetate (MA), ethyl acetate, propyl acetate, methyl propionate, ethyl propionate, and propyl propionate.

Examples of the cyclic ethers include 1,3-dioxolane, 4-methyl-1,3-dioxolane, tetrahydrofuran, and 2-methyltetrahydrofuran.

Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, diethylene glycol dimethyl ether, 1,1,2,2-tetrafluoroethyl-2,2,2-trifluoroethyl ether, and 1,1,2,2-tetrafluoroethyl-2,2,3,3-tetrafluoropropyl ether.

### (Salt)

In lithium-ion secondary batteries, lithium-metal secondary batteries, and the like, a lithium salt is used as the salt. Examples thereof include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylates, LiCl, LiBr, LiI, phosphates, borates, and imide salts. Examples of the phosphates include lithium difluorophosphate (LiPO₂F₂), lithium difluorobis(oxalato)phosphate (LiDFBOP), and lithium tetrafluoro(oxalato)phosphate. Examples of the borates include lithium bis(oxalato)borate (LiBOB) and lithium difluoro(oxalato)borate (LiDFOB). Examples of the imide salts include lithium bis(fluorosulfonyl)imide (LiN(FSO₂)₂), lithium bis(trifluoromethanesulfonyl)imide (LiN(CF₃SO₂)₂), lithium trifluoromethanesulfonyl(nonafluorobutanesulfonyl)imide (LiN(CF₃SO₂)(C₄F₉SO₂)), and lithium bis(pentafluoroethanesulfonyl)imide (LiN(C₂F₅SO₂)₂). The nonaqueous electrolyte may contain one type of lithium salt, or may contain two or more types in combination.

The concentration of the lithium salt in the nonaqueous electrolyte is 0.5 mol/L or more and 2 mol/L or less, for example.

The content of each component in the nonaqueous electrolyte is determined, for example, by gas chromatography under the following conditions.
Measurement apparatus: GC-2010 Plus manufactured by Shimadzu Corporation
Column: HP-1 (1 µm × 60 m) manufactured by J&W
Linear velocity: 30.0 cm/sec
Injection port temperature: 270°C
Detector: FID 290°C (sens. 10¹)

The following specifically describes the other elements of configuration of the nonaqueous electrolyte secondary battery of the present disclosure.

### [Positive Electrode]

The positive electrode includes a positive electrode current collector and a positive electrode mixture layer provided on a surface of the positive electrode current collector. The positive electrode current collector is made of a sheet-shaped conductive material. The positive electrode mixture layer is supported on one or both surfaces of the positive electrode current collector. Usually, the positive electrode mixture layer is a layer or film composed of a positive electrode mixture. The thickness of the positive electrode mixture layer is, for example, 10 µm to 150 µm on one surface of the positive electrode current collector. The positive electrode mixture contains a positive electrode active material as an essential component.

The positive electrode mixture layer may contain a conductive agent as an optional component. Examples of the conductive agent include carbon-based materials such as carbon black (CB), acetylene black (AB), Ketjen black, carbon nanotubes (CNTs), graphene, and graphite. One type thereof may be used singly, or two or more types thereof may be used in combination.

The positive electrode mixture layer may contain a binder. Examples of the binder include fluorine-based resins such as polytetrafluoroethylene (PTFE) and polyvinylidene fluoride (PVDF), polyacrylonitrile (PAN), polyimide-based resins, acrylic-based resins, and polyolefin-based resins. One type thereof may be used singly, or two or more types thereof may be used in combination.

Examples of the positive electrode current collector include non-porous conductive substrates (e.g., a metal foil), and porous conductive substrates (e.g., a mesh, a net, and a punched sheet). Examples of the material of the positive electrode current collector include aluminum, aluminum alloys, titanium, and titanium alloys.

As the positive electrode active material, a lithium-containing composite oxide can be used. The lithium-containing composite oxide may have a layered rock-salt structure. The layered rock-salt structure may belong to the space group R-3 or the space group C2/m, for example. Among these, a layered rock-salt structure belonging to the space group R-3m is preferred in terms of high capacity and high stability of the crystal structure. The layered rock-salt structure of the lithium-containing composite oxide may include a transition metal layer, an Li layer, and an oxygen layer.

From the viewpoint of achieving a high capacity, the proportion of Ni (Ni content) to metal elements other than Li in the lithium-containing composite oxide may be 50 at% or more, 80 at% or more, or 90 at% or more.

From the viewpoint of stabilizing the crystal structure of the lithium-containing composite oxide and improving the heat resistance of the battery, the proportion of Co (Co content) to the metal elements other than Li in the lithium-containing composite oxide may be 0 at% or more and 16 at% or less, or 1.5 at% or more and 16 at% or less.

Similarly, from the viewpoint of stabilizing the crystal structure of the lithium-containing composite oxide and improving the heat resistance of the battery, the proportion of Al (Al content) to the metal elements other than Li in the lithium-containing composite oxide may be 0 at% or more and 18.5 at% or less, or 4 at% or more and 10 at% or less.

From the viewpoint of cost reduction, the proportion of Mn (Mn content) to the metal elements other than Li in the lithium-containing composite oxide may be 0 at% or more and 50 at% or less, or 0 at% or more and 30 at% or less.

The content of each metal element contained in the lithium-containing composite oxide is measured, for example, by inductively coupled plasma (ICP) optical emission spectroscopy.

The lithium-containing composite oxide may be a composite oxide represented by the general formula LiₐNiₓCo_{y}Al_{z}M1_{w}O_{2-b} (where in the formula, 0.8 ≤ a ≤ 1.2, 0.80 ≤ x ≤ 0.95, 0.015 ≤ y ≤ 0.16, 0.04 ≤ z ≤ 0.185, 0 ≤ w ≤ 0.145, 0 ≤ b < 0.05, x + y + z + w = 1, and M1 is at least one element selected from Mn, Fe, Ti, Si, Nb, Zr, Mo, and Zn), for example. In this case, M1 is preferably Mn.

### [Negative Electrode]

The negative electrode includes a negative electrode current collector and may include a negative electrode mixture layer provided on a surface of the negative electrode current collector. The negative electrode current collector is made of a sheet-shaped conductive material. The negative electrode mixture layer is supported on one or both surfaces of the negative electrode current collector. Usually, the negative electrode mixture layer is a layer or film composed of a negative electrode mixture. The thickness of the negative electrode mixture layer is, for example, 10 µm to 150 µm on one surface of the negative electrode current collector. The negative electrode mixture contains a negative electrode active material as an essential component and may contain, for example, a binder, a conductive agent, and a thickener as optional components. Known materials can be used as the binder, the conductive agent, and the thickener.

Examples of the negative electrode active material include a material that electrochemically absorbs and releases lithium ions, lithium metal, and lithium alloys. As the material that electrochemically absorbs and releases lithium ions, a carbon material or an alloy-based material is used, for example.

Examples of the carbon material include graphite, graphitizable carbon (soft carbon), and non-graphitizable carbon (hard carbon). Preferred among these is graphite, which is excellent in stability during charging and discharging and has small irreversible capacity.

The graphite is a carbonaceous material in which a graphite-based crystal structure is developed. The interplanar spacing d002 of the (002) plane of the graphite measured by X-ray diffraction method may be, for example, 0.340 nm or less, or 0.3354 nm or more and 0.340 nm or less. The crystallite size Lc(002) of the graphite may be, for example, 5 nm or more, or 5 nm or more and 200 nm or less. The crystallite size Lc(002) is measured by the Scherrer method, for example. When the interplanar spacing d002 of the (002) plane and the crystallite size Lc(002) of the graphite are within any of the above ranges, a high capacity tends to be obtained.

The alloy-based material is a material containing at least one type of metal capable of forming an alloy with lithium. Examples of the material such as above include silicon, tin, silicon alloys, tin alloys, silicon oxide, tin oxide, and silicon-containing materials.

The silicon-containing materials include, for example, a lithium ion conductive phase and silicon phases dispersed in the lithium ion conductive phase. As the lithium ion conductive phase, a silicon oxide phase, a silicate phase, or a carbon phase can be used, for example. The content of the silicon phases dispersed in the lithium ion conductive phase is, for example, 30% by mass or more and 95% by mass or less, and may be 35% by mass or more and 75% by mass or less. One type of silicon-containing material may be used singly, or two or more types thereof may be used in combination.

The main component (e.g., 95 to 100% by mass) of the silicon oxide phase can be silicon dioxide. A silicon-containing material including a silicon oxide phase and silicon phases dispersed in the silicon oxide phase is represented by SiOₓ. x is, for example, 0.5 ≤ x < 2, and may be 0.8 ≤ x ≤ 1.6. The silicon oxide phase may be an amorphous phase. SiOₓ is obtained by a disproportionation reaction of silicon monoxide, for example.

The silicate phase is preferred in terms of small irreversible capacity. In particular, a silicate phase containing lithium (hereinafter, also referred to as lithium silicate phase) can be preferably used as a lithium ion conductive phase with high initial charge and discharge efficiency.

The lithium silicate phase may be an oxide phase containing lithium (Li), silicon (Si), and oxygen (O), and may contain another element. The atomic ratio: O/Si of O to Si in the lithium silicate phase is greater than 2 and less than 4, for example. Preferably, O/Si is greater than 2 and less than 3. The atomic ratio: Li/Si of Li to Si in the lithium silicate phase is greater than 0 and less than 4, for example. The lithium silicate phase can have a composition represented by formula: Li_{2z}SiO_{2+z} (0 < z < 2). z preferably satisfies the relation of 0 < z < 1, and more preferably satisfies the relation of z = 1/2. Examples of the element other than Li, Si, and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, non-crystalline carbon (i.e., amorphous carbon) having low crystallinity. The non-crystalline carbon may be, for example, hard carbon, soft carbon, or otherwise.

A silicon-containing material in which silicon phases are dispersed in a carbon phase can be obtained, for example, by pulverizing a mixture of a carbon source and raw material silicon while stirring using a ball mill or the like to form fine particles, and then heat-treating the mixture in an inert atmosphere. As the carbon source, a saccharide such as carboxymethylcellulose (CMC) or a water-soluble resin such as polyvinylpyrrolidone is used, for example.

As the negative electrode active material, a silicon-containing material and a carbon material may be used in combination. The volume of the silicon-containing material expands and contracts with charging and discharging. Therefore, when the proportion of the negative electrode active material occupied by the silicon-containing material is increased, the contact failure between the negative electrode active material and the negative electrode current collector is likely to occur in association with charging and discharging. By contrast, the combinational use of the silicon-containing material and the carbon material enables achievement of excellent cycle characteristics while giving high capacity to the negative electrode.

The proportion of the silicon-containing material to the total of the silicon-containing material and the carbon material is preferably, for example, 0.5 to 15% by mass, and more preferably 1 to 10% by mass. This makes it easy to achieve both high capacity and improved cycle characteristics.

Examples of the negative electrode current collector that can be used include non-porous conductive substrates (e.g., a metal foil), and porous conductive substrates (e.g., a mesh, a net, and a punched sheet). Examples of the material of the negative electrode current collector include stainless steel, nickel, nickel alloys, copper, and copper alloys.

The composition of the silicon-containing material can be determined, for example, by obtaining a backscattered electron image of a cross section of the negative electrode mixture layer using a field emission scanning electron microscope (FE-SEM), observing particles of the silicon-containing material, and performing elemental analysis on the observed particles of the silicon-containing material. For the elemental analysis, analysis using an electron probe microanalyzer (EPMA) is used, for example.

The negative electrode mixture layer may contain a binder. Examples of the binder include fluorocarbon resins (e.g., polytetrafluoroethylene and polyvinylidene fluoride), polyolefin resins (e.g., polyethylene and polypropylene), polyamide resins (e.g., aramid resin), polyimide resins (e.g., polyimide and polyamideimide), acrylic resins (e.g., polyacrylic acid, polymethacrylic acid, acrylic acid-methacrylic acid copolymers, ethylene-acrylic acid copolymers, and salts of these), vinyl resins (e.g., polyvinyl acetate), and rubber-like materials (e.g., styrene-butadiene copolymer rubber (SBR)). One type of binder may be used singly, or two or more types thereof may be used in combination.

The negative electrode mixture layer may contain a thickener. Examples of the thickener include cellulose derivatives such as cellulose ether. Examples of the cellulose derivatives include carboxymethyl cellulose (CMC) and chemically modified products thereof, and methyl cellulose. The chemically modified products of CMC also include salts of CMC. Examples of the salts include alkali metal salts (e.g., sodium salts) and ammonium salts. One type of thickener may be used singly, or two or more types thereof may be used in combination.

The negative electrode mixture layer may contain a conductive agent. Examples of the conductive agent include carbon nanotubes (CNTs) and conductive particles. Examples of the conductive particles include conductive carbon (e.g., carbon black) and metal powders. One type of conductive agent may be used singly, or two or more types thereof may be used in combination.

The negative electrode current collector is selected according to the type of nonaqueous electrolyte secondary battery. An example of the negative electrode current collector is a sheet-shaped one. As the current collector, a metal foil or the like may be used. Alternatively, a porous current collector may be used. Examples of the porous current collector include a mesh, a punched sheet, and an expanded metal.

Examples of the material of the negative electrode current collector include stainless steel, nickel, nickel alloys, copper, and copper alloys.

### [Separator]

It is desirable to provide a separator between the positive electrode and the negative electrode. The separator is excellent in ion permeability and has moderate mechanical strength and insulating properties. As the separator, a microporous thin film, a woven fabric, a nonwoven fabric, or a laminate of at least two selected from these can be used, for example. Preferably, the material of the separator is polyolefin (e.g., polypropylene or polyethylene).

One example of the configuration of the nonaqueous electrolyte secondary battery is a configuration in which an electrode group including the positive and negative electrodes wound together with the separator therebetween is housed, together with the nonaqueous electrolyte, in a case such as a battery can. However, the configuration is not limited thereto, and any other form of the electrode group may be employed. For example, the electrode group may be a stacked type in which the positive electrode and the negative electrode are stacked with the separator therebetween.

A typical battery can have a bottomed cylindrical shape, but the battery can is not limited thereto. A bottomed cylindrical battery can include a bottom portion and a cylindrical side portion rising from the bottom portion. The end portion facing the bottom portion is open. Preferably, the battery can is made of a metal containing at least iron. Such a battery can have high mechanical strength. The material of the battery can may be iron (Fe), an Fe alloy, or stainless steel, for example. Preferably, a nickel-plated layer is formed on the inner surface of the battery can.

The case is not limited to the battery can. The shape of the nonaqueous electrolyte secondary battery is also not limited. The nonaqueous electrolyte secondary battery may be cylindrical, prismatic, coin-shaped, or button-shaped, for example.

Hereinafter, the configuration of the nonaqueous electrolyte secondary battery is described with reference to FIG. 1. FIG. 1 is a longitudinal cross-sectional view of a cylindrical secondary battery as an example of the present embodiment. However, the present disclosure is not limited to the following configuration.

The nonaqueous electrolyte secondary battery (hereinafter referred to as battery 10) includes an electrode group 18, a nonaqueous electrolyte, and a bottomed cylindrical battery can 22 that houses these. The battery can 22 is made of iron or stainless steel, for example. The inner surface of the battery can 22 may be plated with nickel or the like. A sealing body 11 is crimped and fixed to the opening of the battery can 22 via a gasket 21. Thus, the interior of the battery is sealed. The sealing body 11 includes a valve body 12, a metal plate 13, and an annular insulating member 14 provided between the valve body 12 and the metal plate 13. The valve body 12 and the metal plate 13 are connected to each other at their respective central portions. A positive electrode lead 15a led out from the positive electrode 15 is connected to the metal plate 13. In the above configuration, the valve body 12 functions as a positive electrode external terminal. A negative electrode lead 16a led out from the negative electrode 16 is connected to the inner surface of the bottom of the battery can 22. An annular groove 22a is formed in the vicinity of the opening end of the battery can 22. A first insulation plate 23 is provided between one of the end faces of the electrode group 18 and the annular groove 22a. A second insulation plate 24 is provided between the other end face of the electrode group 18 and the bottom of the battery can 22. The electrode group 18 is formed by winding the positive electrode 15 and the negative electrode 16 with the separator 17 therebetween.

### (Supplemental Note)

According to the above description, the following techniques are disclosed.

### (Technique 1)

A nonaqueous electrolyte for a secondary battery, including:
a nonaqueous solvent; a salt that dissolves in the nonaqueous solvent; and an additive that dissolves in the nonaqueous solvent,
wherein the additive includes a 1,4-dioxane compound and a sulfur-containing compound, the sulfur-containing compound having at least one of an SO₃ structure and an SO₄ structure.

### (Technique 2)

The nonaqueous electrolyte for a secondary battery according to Technique 1, wherein the 1,4-dioxane compound includes at least one selected from the group consisting of 1,4-dioxane and a 1,4-dioxane derivative.

### (Technique 3)

The nonaqueous electrolyte for a secondary battery according to Technique 2, wherein the 1,4-dioxane derivative is a compound in which at least one hydrogen atom of 1,4-dioxane is substituted with a substituent,
the substituent is a halogen atom, a hydrocarbon group, or an oxyhydrocarbon group, and
at least one hydrogen atom of the hydrocarbon group may be substituted with a halogen atom.

### (Technique 4)

The nonaqueous electrolyte for a secondary battery according to Technique 3, wherein the 1,4-dioxane compound is represented by general formula (1): 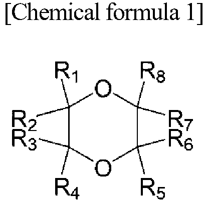 , in which
R1 to R8 each independently represent a hydrogen atom or the substituent.

### (Technique 5)

The nonaqueous electrolyte for a secondary battery according to any one of Techniques 1 to 4, wherein the sulfur-containing compound includes at least one selected from the group consisting of a hexavalent sulfur compound and a tetravalent sulfur compound.

### (Technique 6)

The nonaqueous electrolyte for a secondary battery according to Technique 5, wherein the hexavalent sulfur compound has a structure represented by general formula (2): 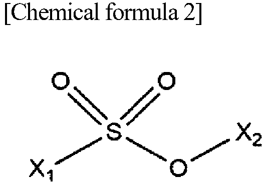 , in which
X1 represents a halogen atom, a hydrocarbon group, or an oxyhydrocarbon group,
X2 represents a hydrocarbon group, a silyl group, or an alkali metal,
at least one hydrogen atom of the hydrocarbon group may be substituted with a halogen atom, and
X1 and X2 may form a ring.

### (Technique 7)

The nonaqueous electrolyte for a secondary battery according to Technique 5 or 6, wherein the tetravalent sulfur compound is represented by general formula (3): 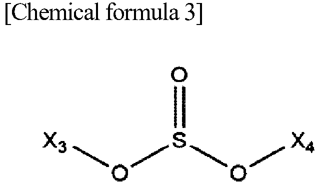 , in which
X3 and X4 each independently represent a hydrocarbon group, a silyl group, or an alkali metal,
at least one hydrogen atom of the hydrocarbon group may be substituted with a halogen atom, and
X3 and X4 may form a ring.

### (Technique 8)

The nonaqueous electrolyte for a secondary battery according to any one of Techniques 1 to 7, wherein a mass content of the 1,4-dioxane compound is 0.1% or more and 5% or less.

### (Technique 9)

The nonaqueous electrolyte for a secondary battery according to any one of Techniques 1 to 8, wherein a mass content of the sulfur-containing compound is 0.1% or more and 5% or less.

### (Technique 10)

The nonaqueous electrolyte for a secondary battery according to any one of Techniques 1 to 9, wherein a mass content Ca of the 1,4-dioxane compound and a mass content Cb of the sulfur-containing compound satisfy 0.5 ≤ Cb/Ca ≤ 3.

### (Technique 11)

The nonaqueous electrolyte for a secondary battery according to any one of Techniques 1 to 10, wherein a mass content Ca of the 1,4-dioxane compound and a mass content Cb of the sulfur-containing compound satisfy 1 ≤ Cb/Ca ≤ 3.

### (Technique 12)

The nonaqueous electrolyte for a secondary battery according to any one of Techniques 5 to 7, wherein the hexavalent sulfur compound includes at least one selected from the group consisting of lithium fluorosulfonate, 1-propene-1,3-sultone, ethylene sulfate, and 1,5,2,4-dioxadithiane-2,2,4,4-tetraoxide.

### (Technique 13)

The nonaqueous electrolyte for a secondary battery according to any one of Techniques 5 to 7, wherein the tetravalent sulfur compound includes at least one selected from the group consisting of ethylene sulfite and vinylethylene sulfite.

### (Technique 14)

A secondary battery including:
a positive electrode;
a separator;
a negative electrode that faces the positive electrode with the separator therebetween;
a nonaqueous electrolyte; and
a battery can that houses the positive electrode, the separator, the negative electrode, and the nonaqueous electrolyte,
wherein the nonaqueous electrolyte is the nonaqueous electrolyte for a secondary battery according to any one of Techniques 1 to 13

### (Technique 15)

The secondary battery according to Technique 14, wherein

### [Examples]

The following specifically describes the present disclosure based on examples and comparative examples. However, the present disclosure is not limited to the following examples.

### <<Examples 1 to 5 and Comparative Examples 1 to 10>>

Nonaqueous electrolyte secondary batteries were fabricated and evaluated by the following procedure.

### (1) Positive Electrode Production

An appropriate amount of N-methyl-2-pyrrolidone (NMP) was added to a positive electrode mixture and mixed to obtain a positive electrode slurry. The positive electrode mixture was obtained by adding 2.5 parts by mass of acetylene black and 2.5 parts by mass of polyvinylidene fluoride to 95 parts by mass of a lithium-containing composite oxide (LiNi_{0.8}Co_{0.18}Al_{0.02}O₂). Next, the positive electrode slurry was applied to the surfaces of an aluminum foil, and the resulting coated film was dried and rolled to form a positive electrode mixture layer (thickness 95 µm, density 3.6 g/cm³) on each surface of the aluminum foil. Thus, a positive electrode was obtained.

### (2) Negative Electrode Production

An appropriate amount of water was added to a negative electrode mixture and mixed to obtain a negative electrode slurry. A s the negative electrode mixture, a mixture of a negative electrode active material, a binder, and a conductive agent was used. As the negative electrode active material, a mixture of a silicon-containing material and graphite (average particle diameter (D50) 25 µm) was used. As the silicon-containing material, SiOₓ particles (x = 1, average particle diameter (D50) 5 µm) whose surfaces were coated with a conductive layer of conductive carbon were used. In the negative electrode active material, the mass ratio of the silicon-containing material except for the conductive layer to the graphite was set to 6:94. As the binder, a combination of sodium polyacrylate (PAA-Na), a sodium salt of CMC (CMC-Na), and SBR was used. The contents of PAA-Na, CMC-Na, and SBR in the negative electrode mixture were each set to 1% by mass. Next, the negative electrode slurry was applied to the surfaces of a copper foil, and the resulting coated film was dried and rolled to form a negative electrode mixture layer (thickness 80 µm, density 1.6 g/cm³) on each surface of the copper foil. Thus, a negative electrode was obtained.

### (3) Nonaqueous Electrolyte Preparation

Nonaqueous electrolytes were prepared by dissolving LiPF₆ and, as necessary, any of the additives shown in Table 1 in a mixed solvent of ethylene carbonate (EC), dimethyl carbonate (DMC), and methyl acetate (MA) (EC:DMC:MA = 20:60:20 (volume ratio)). The concentration of LiPF₆ in each nonaqueous electrolyte was set to 1.35 mol/L. The concentration (initial concentration) of each additive in the nonaqueous electrolyte was set to a corresponding one of the values (% by mass) shown in Table 1.

### (4) Nonaqueous Electrolyte Secondary Battery Fabrication

An Al-made positive electrode lead was attached to the positive electrode obtained above, and an Ni-made negative electrode lead was attached to the negative electrode obtained above. In an inert gas atmosphere, the positive electrode and the negative electrode were wound into a spiral shape with a polyethylene-made thin film (separator) interposed therebetween to produce a wound electrode group. A first insulation plate was placed on the lower end surface of the electrode group. The electrode group was inserted into a battery can. The negative electrode lead was resistance-welded to the bottom of the battery can. An iron can with nickel plated on the inner surface thereof was used as the battery can. After a second insulation plate was placed on the upper end surface of the electrode group, an annular groove was formed in the vicinity of the opening end of the battery can. Next, the positive electrode lead was connected to a metal plate serving as a safety mechanism provided in the sealing body. One of the nonaqueous electrolytes was then injected into the battery can. Thereafter, the sealing body was supported on the annular groove formed in the battery can via a gasket, and the opening end of the battery can was crimped to the periphery of the sealing body to complete a lithium-ion secondary battery.

### [Evaluation 1] Overdischarge Characteristics

A 1-kΩ resistor was connected between the positive electrode and the negative electrode of the battery, and the battery was stored in a constant temperature bath at 60°C for 30 days while being kept in a discharged state. Thereafter, the battery was disassembled, and the content (mass basis) of an Fe element in the nonaqueous electrolyte was quantified by inductively coupled plasma (ICP) optical emission spectroscopy. The relative values (indices) were determined with the content of the Fe element in the nonaqueous electrolyte in Comparative Example 1 taken as 100.

### [Evaluation 2] High-Temperature Cycle Characteristics

In an environment at 45°C, constant current charging was performed at a current of 0.3 It until the voltage of the nonaqueous electrolyte secondary battery reached 4.2 V, and constant voltage charging was then performed at a voltage of 4.2 V until the current reached 0.05 It. After a 20-minute pause, constant current discharging was performed at a current of 0.5 It until the voltage of the nonaqueous electrolyte secondary battery reached 2.5 V. The discharge capacity (Ci) at that time was measured. Such a cycle of charging, pause, and discharging was defined as one cycle, and the cycle was performed 300 times to determine the discharge capacity (Cc) at the 300th cycle. The rate (%) of the discharge capacity Cc when the initial discharge capacity Ci was taken as 100% was determined as a 45°C-cycle capacity retention rate.

The results of Examples and Comparative Examples are shown in Table 1. In Table 1, batteries E1 to E5 respectively correspond to Examples 1 to 5, and batteries C1 to C10 respectively correspond to Comparative Examples 1 to 10.

The abbreviations for the additives in the table are as follows.
1,4DOX: 1,4-Dioxane
1,3DOX: 1,3-Dioxane
LiFSO₃: Lithium fluorosulfonate
PRS: 1-Propene-1,3-sultone
DTD: Ethylene sulfate
MMDS: 1,5,2,4-Dioxadithiane-2,2,4,4-tetraoxide
LiFSI: Lithium bis(fluorosulfonyl)imide

**[Table 1]**

| | 1,4-Dioxane compound | | Sulfur-containing compound | | Concentration ratio | Amount of Fe | 45°C-Cycle capacity retention rate |
|---|---|---|---|---|---|---|---|
| | Type | (% by mass) | Type | (% by mass) | Cb/Ca | Index | (%) |
| E1 | 1,4DOX | 1.0 | LiFSO₃ | 1.0 | 1.0 | 98 | 87.4 |
| E2 | 1,4DOX | 1.0 | PRS | 1.0 | 1.0 | 104 | 86.8 |
| E3 | 1,4DOX | 1.0 | DTD | 1.0 | 1.0 | 100 | 86.4 |
| E4 | 1,4DOX | 1.0 | MMDS | 1.0 | 1.0 | 108 | 87.2 |
| E5 | 1,4DOX | 0.5 | MMDS | 1.0 | 2.0 | 112 | 87.8 |
| E6 | 1.4DOX | 2.0 | MMDS | 0.5 | 0.25 | 102 | 86.0 |
| C1 | - | - | - | - | | 100 | 85.2 |
| C2 | - | - | LiFSO₃ | 1.0 | | 192 | 87.2 |
| C3 | - | - | PRS | 1.0 | | 204 | 86.4 |
| C4 | - | - | DTD | 1.0 | | 178 | 86.1 |
| C5 | - | - | MMDS | 1.0 | | 224 | 86.5 |
| C6 | - | - | LiFSI | 1.0 | | 112 | 85.8 |
| C7 | 1,3DOX | 1.0 | - | - | | 106 | 84.8 |
| C8 | 1,4DOX | 1.0 | - | - | | 101 | 85.8 |
| C9 | 1,3DOX | 1.0 | LiFSO₃ | 1.0 | 1.0 | 199 | 86.9 |
| C10 | 1,4DOX | 1.0 | LiFSI | 1.0 | 1.0 | 114 | 85.4 |

It can be understood from Table 1 that when the nonaqueous electrolyte contains a sulfur-containing compound (S) or lithium bis(fluorosulfonyl)imide (LiFSI), the high-temperature cycle characteristics are improved (comparison with the batteries C1 to C6). Further, the effect of improving the high-temperature cycle characteristics is slight with LiFSI, and is remarkable when the nonaqueous electrolyte contains the sulfur-containing compound (S). However, in the batteries C2 to C5 in which the nonaqueous electrolyte contains a sulfur-containing compound (S), the amount of Fe element eluted from the battery can during over-discharging was very large, and the overdischarge characteristics are insufficient. The overdischarge characteristics of the battery C6 in which the nonaqueous electrolyte contains LiFSI are within an acceptable range.

By contrast, when the nonaqueous electrolyte contains a sulfur-containing compound (S) and the 1,4-dioxane compound, elution of the Fe element from the battery can during over-discharging was remarkably suppressed, and the high-temperature cycle characteristics are also improved compared to the batteries C2 to C5 containing only a sulfur-containing compound (S) (comparison with the batteries E1 to E5). Further, from the comparison with the batteries E4 to E6, it can be seen that the effect of improving the high-temperature cycle characteristics is significant when the Cb/Ca ratio is greater than 1.

Furthermore, it can be seen from the comparison between the batteries C2 and C9 that the effects of improving the high-temperature cycle characteristics and suppressing elution of the Fe element from the battery can during over-discharging are unique to the 1,4-dioxane compound, and no effects are observed with 1,3-dioxane.

Note that the amount of the Fe element eluted from the battery C10, in which the nonaqueous electrolyte contains the 1,4-dioxane compound and LiFSI, is slightly larger than that eluted from the battery C6, and the high-temperature cycle characteristics of the battery C10 are also slightly lower than those of the battery C6.

### [Industrial Applicability]

A secondary battery including the nonaqueous electrolyte according to the present disclosure is useful as a main power supply for mobile communication devices, portable electronic devices, and the like. However, the applications of the nonaqueous electrolyte secondary battery are not limited thereto.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10: Secondary battery, 11: Sealing body, 12: Valve body, 13: Metal plate, 14: Insulating member, 15: Positive electrode, 15a: Positive electrode lead, 16: Negative electrode, 16a: Negative electrode lead, 17: Separator, 18: Electrode group, 21: Gasket, 22: Battery can, 22a: Groove, 23: First insulation plate, 24: Second insulation plate

## Claims

1. A nonaqueous electrolyte for a secondary battery, comprising:
a nonaqueous solvent; a salt that dissolves in the nonaqueous solvent; and an additive that dissolves in the nonaqueous solvent,
wherein the additive includes a 1,4-dioxane compound and a sulfur-containing compound, the sulfur-containing compound having at least one of an SO₃ structure and an SO₄ structure.

2. The nonaqueous electrolyte for a secondary battery according to claim 1,
wherein the 1,4-dioxane compound includes at least one selected from the group consisting of 1,4-dioxane and a 1,4-dioxane derivative.

3. The nonaqueous electrolyte for a secondary battery according to claim 2,
wherein the 1,4-dioxane derivative is a compound in which at least one hydrogen atom of 1,4-dioxane is substituted with a substituent,
the substituent is a halogen atom, a hydrocarbon group, or an oxyhydrocarbon group, and
at least one hydrogen atom of the hydrocarbon group may be substituted with a halogen atom.

4. The nonaqueous electrolyte for a secondary battery according to claim 3,
wherein the 1,4-dioxane compound is represented by general formula (1): 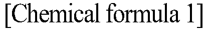 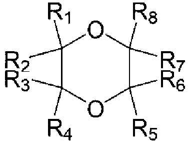 , in which
R1 to R8 each independently represent a hydrogen atom or the substituent.

5. The nonaqueous electrolyte for a secondary battery according to claim 1,
wherein the sulfur-containing compound includes at least one selected from the group consisting of a hexavalent sulfur compound and a tetravalent sulfur compound.

6. The nonaqueous electrolyte for a secondary battery according to claim 5,
wherein the hexavalent sulfur compound has a structure represented by general formula (2): 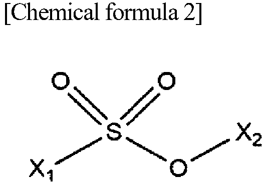 , in which
X1 represents a halogen atom, a hydrocarbon group, or an oxyhydrocarbon group,
X2 represents a hydrocarbon group, a silyl group, or an alkali metal,
at least one hydrogen atom of the hydrocarbon group may be substituted with a halogen atom, and
X1 and X2 may form a ring.

7. The nonaqueous electrolyte for a secondary battery according to claim 5,
wherein the tetravalent sulfur compound is represented by general formula (3): 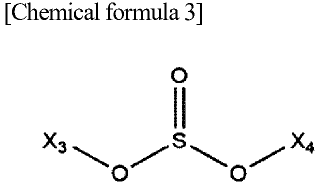 , in which
X3 and X4 each independently represent a hydrocarbon group, a silyl group, or an alkali metal,
at least one hydrogen atom of the hydrocarbon group may be substituted with a halogen atom, and
X3 and X4 may form a ring.

8. The nonaqueous electrolyte for a secondary battery according to claim 1,
wherein a mass content of the 1,4-dioxane compound is 0.1% or more and 5% or less.

9. The nonaqueous electrolyte for a secondary battery according to claim 1,
wherein a mass content of the sulfur-containing compound is 0.1% or more and 5% or less.

10. The nonaqueous electrolyte for a secondary battery according to claim 1,
wherein a mass content Ca of the 1,4-dioxane compound and a mass content Cb of the sulfur-containing compound satisfy 0.5 ≤ Cb/Ca ≤ 3.

11. The nonaqueous electrolyte for a secondary battery according to claim 1,
wherein a mass content Ca of the 1,4-dioxane compound and a mass content Cb of the sulfur-containing compound satisfy 1 ≤ Cb/Ca ≤ 3.

12. The nonaqueous electrolyte for a secondary battery according to claim 5,
wherein the hexavalent sulfur compound includes at least one selected from the group consisting of lithium fluorosulfonate, 1-propene-1,3-sultone, ethylene sulfate, and 1,5,2,4-dioxadithiane-2,2,4,4-tetraoxide.

13. The nonaqueous electrolyte for a secondary battery according to claim 5,
wherein the tetravalent sulfur compound includes at least one selected from the group consisting of ethylene sulfite and vinylethylene sulfite.

14. A secondary battery comprising:
a positive electrode;
a separator;
a negative electrode that faces the positive electrode with the separator therebetween;
a nonaqueous electrolyte; and
a battery can that houses the positive electrode, the separator, the negative electrode, and the nonaqueous electrolyte,
wherein the nonaqueous electrolyte is the nonaqueous electrolyte for a secondary battery according to claim 1.

15. The secondary battery according to claim 14,
wherein the battery can is made of a metal containing at least iron.
